# EUROPEAN PATENT SPECIFICATION

(11) **EP 1 312 549 B1**
(45) Date of publication and mention of the grant of the patent: **17.01.2007**
(21) Application number: 02425699.2
(22) Date of filing: 15.11.2002
(51) Int. Cl.: B65B 25/14, B65B 59/00, B65G 17/26

(54) **An apparatus for forming ordered groups of products such as rolls of toilet or kitchen paper**
Vorrichtung zum bilden geordneter Gruppen von Gegenständen wie Toiletten- oder Küchenpapierrollen
Installation pour former des groupes rangés d' articles comme des rouleaux de papier hygiénique ou essuie-tout

(30) Priority: 20.11.2001 IT BO20010700
(43) Date of publication of application: 21.05.2003
(73) Proprietor: Tissue Machinery Company S.p.A., 40057 Cadriano di Granarolo Emilia BO (IT)
(72) Inventor: Zagnoni, Christian, 40010 Calcara Di Crespellano (Bologna) (IT); Poli, Gilberto, 40050 Castello Di Serravalle (Bologna) (IT)
(74) Representative: Pederzini, Paolo

(56) References cited:
- EP-A- 1 067 048
- WO-A-00/68088
- GB-A- 844 265
- US-A- 4 572 760

## Description

The present invention relates to automatic packaging machinery, especially for rolls of toilet or kitchen paper, and specifically addresses an apparatus for forming ordered groups of products of suitable commercial size and to move the groups of products along a supporting surface that feeds them to a machine, for example, a wrapping machine located further downstream.

To form groups of paper rolls ready for packaging in multipacks of conventional commercial sizes, prior art teaches the use of machines and devices equipped with chain conveyors running side by side over a product supporting surface and consisting of power-driven chains or tracks with equally spaced, projecting pushers mounted on them. The incoming rolls are fed to the chain conveyors in endless lines and, from these, the conveyor pushers form separate, suitably spaced groups of rolls of desired size. The pushers keep the rolls in each group together and feed the groups along the supporting surface until they reach the machine downstream.

To form groups of products in a desired number of parallel rows running side by side, or to form groups of products of desired size arranged in single rows following one another, taking into account the size of the individual products or rolls, prior art machines can be adjusted in several different ways to vary spacing not only sideways between the pushers on the chain conveyors running side by side but also lengthways between the pushers on the same chain conveyor.

In a known machine described in document IT BO2000A000536 in the name of the same Applicant as the present, adjustment of the sideways spacing between the pushers mounted side by side is permitted by the fact that the chain conveyors support the pushers through individual interposed carriages that slide on respective guide rails, each mounted on a separate chain conveyor and adjustable in parallel with the product supporting surface, transversely to the direction of product feed, that is to say, transversely to the respective supporting guide rails. It is also known from document GB844265 an endless chain conveyor are pushing loaves of bread L from a lifter table through wrapping station up to a sealing station by pushers of twin chain conveyers. Bars, which support the respective conveyers, are carried by nuts working on threads formed on shafts, the shafts being coupled by chain and driven by chain. Thus, operation of chain causes the two conveyers to be separated transversely of the direction of conveyance for use with loaves of differing widths.

Machines constructed in this way have proved to be fully satisfactory in terms of performance. The machine structure is, however, very complex which makes these machines unsatisfactory in terms of high construction costs and overall dimensions. Moreover, since the transverse centre distances of the individual carriages relative to the guides on which they slide are small compared to the longitudinal centre distances, the carriages themselves are subjected to considerable forces during their sliding motion which tend to misalign them. This, combined with the presence of numerous bearings, which, as is known, are subject to unavoidable play, means that the machine does not maintain the optimum adjustment configuration for long and requires frequent re-tuning.

The present invention has for a primary object to overcome the above mentioned disadvantages by providing an apparatus that is simpler and more economical to construct.

Another object of the invention is to provide a highly reliable apparatus that offers high quality production even if subjected to frequent changeovers to handle products of different sizes.

Yet another object of the present invention is to provide an apparatus that requires maintenance and adjustment operations to be carried out less frequently.

Accordingly, the invention accomplishes these objects through an apparatus for forming ordered groups of products - especially rolls of toilet or kitchen paper - comprising: a product supporting surface; two or more power-driven chain conveyors mounted above the supporting surface and each equipped with a pair of pulleys, a track or chain looped around the two pulleys and a set of pushers projecting from the track; and characterised in that it further comprises a single pair of parallel guide rails located on each side of the chain conveyors and defining closed-loop paths lying in longitudinal planes at right angles to the product supporting surface; a succession of carriages, engaged with the guide rails and bearing all the chain conveyors side by side in such a manner that they can move towards and away from each other; and means for adjusting the position of the chain conveyors on the carriages according to the size of the required group of products.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic assembly view, with some parts cut away in order to better illustrate others, showing an elevation of the apparatus according to the present invention;
- Figures 2 and 3 are cross sections of the apparatus through the section lines II-II and III-III in Figure 1;
- Figures 4 and 5 are, respectively, a schematic elevation view and a schematic plan view of a detail of the apparatus according to the invention. With reference to the accompanying drawings,

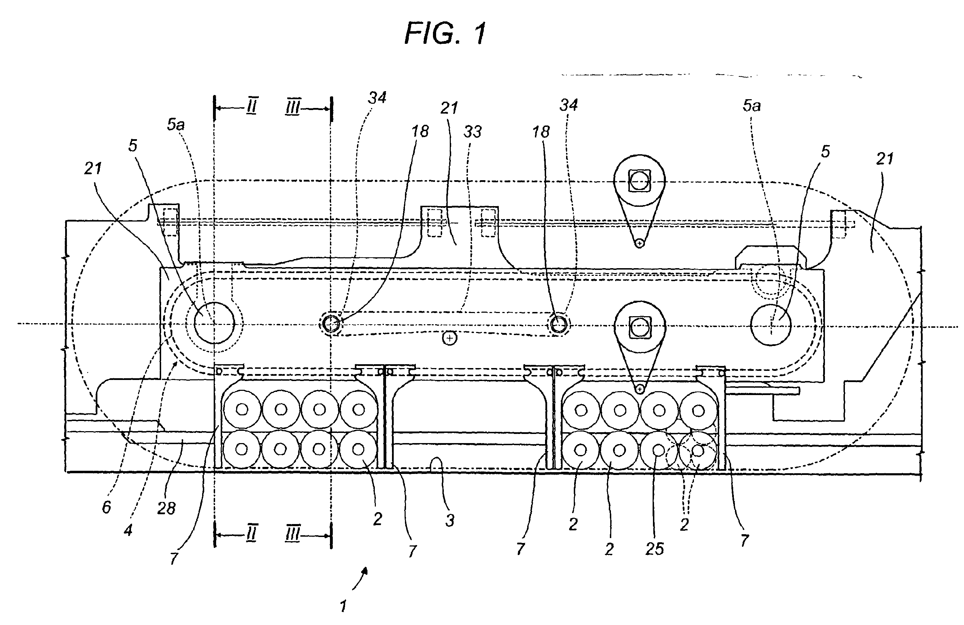

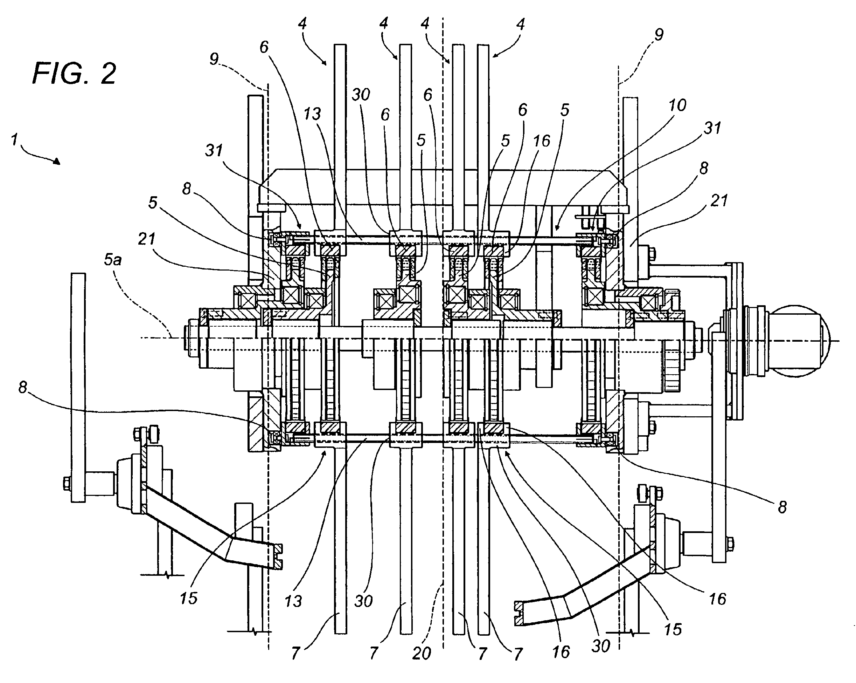

Figures 1 and 2 illustrate an apparatus, labelled 1 in its entirety, designed to form ordered groups of products 2 - especially rolls of toilet or kitchen paper - of varying conventional packaging sizes.

The apparatus 1 essentially comprises: a horizontal supporting surface 3 for the products 2, extending mainly in a longitudinal direction; and power-driven chain conveyors 4, preferably four in number, mounted side by side above the supporting surface 3. Each chain conveyor 4 is equipped with: a pair of pulleys 5 with parallel axes 5a; a track 6 or chain looped around the pair of pulleys 5; and pushers 7 projecting from the track 6 and mounted at regular intervals along the track 6.

The apparatus 1 further comprises a pair of guide rails, labelled 8 in their entirety, and a succession of carriages, labelled 10 in their entirety, that support all the chain conveyors 4. The guide rails 8, which are parallel to each other and located on either side of the assembly of the chain conveyors 4, are supported by the vertical side plates 21 of the apparatus 1 and define closed-loop paths lying in vertical longitudinal planes 9 at right angles to the supporting surface 3 of the products 2. The carriages 10 have opposite ends 31 slidably engaged with the guide rails 8 and include single guide means designed to allow all the chain conveyors 4 to be moved independently towards and away from each other in a direction parallel with the axes of rotation 5a of the pulleys 5.

More specifically, these guide means consist of pairs of cylindrical, carbon bars 13 parallel to the supporting surface 3 of the products 2, oriented in a direction transversal to the plane 14 in which the chain conveyors 4 lie and coupled with the corresponding pushers 7 of the side-by-side chain conveyors 4 in such a way that they can slide freely.

The bars 13 are connected to the pushers 7 through heads 15, which have in them cylindrical holes 30 that are slidably engaged with the bars 13, and which also have protrusions 16 extending towards the track 6 or chain of the respective chain conveyor 4 and designed to connect with matching sides 17 of the track 6 or chain.

The protrusions 16 allow the pushers 7 to perform movements parallel to the bars 13 and correlated to corresponding sideways movements applied to the track 6 by suitable means for adjusting the position of the chain conveyors 4 on the carriages 10 according to the size of the required group of products 2.

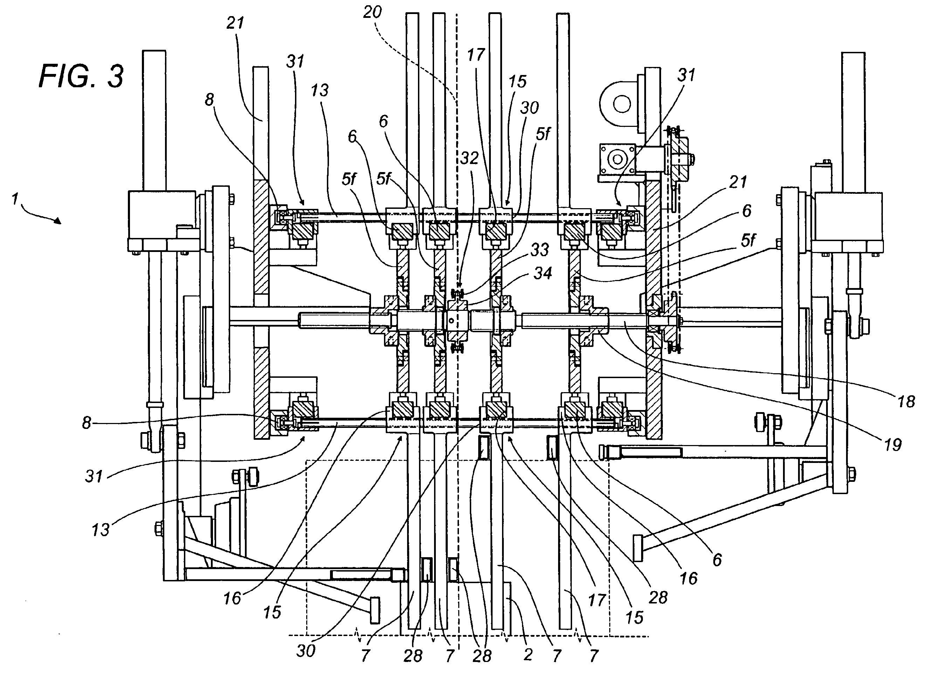

In Figure 3, these adjustment means consist of two adjustment screws 18, each having two opposing threaded sections, extending in a direction parallel to the axes 5a of the pairs of pulleys 5 of the chain conveyor 4, and matching lead nuts 19 associated with the adjustment screws 18 and with flanges 5f of the chain conveyors 4.

The lead nuts 19 are attached to the flanges 5f of the chain conveyors 4 and, by turning the adjustment screws 18 in them, enable the corresponding chain conveyor 4 to be moved en bloc towards and away from a predetermined fixed reference 20 that may be, for example, the line through the centre of the apparatus 1 or one of the other chain conveyors 4 mounted in a fixed position.

Figure 3 shows that the adjustment is performed preferably using a centralised control, labelled 32 in its entirety. More specifically, the control 32 includes a chain 33 looped around a pair of pulleys 34 fixed to the two parallel adjustment screws 18. By operating on the chain 33, it is possible to impart identical rotations on the two pulleys 34. These rotations are then transmitted to the adjustment screws 18 enabling the chain conveyors 4 to be moved in a direction parallel to each other.

In practice, the apparatus 1 made according to the constructional design illustrated in Figure 3, is used to form groups of toilet or kitchen paper rolls 2, each having an internal tube 25 and resting on the supporting surface 3 with the tube 25 oriented in a direction parallel to the supporting surface 3 itself and held in place on the side opposite the supporting surface 3 by stops consisting of longitudinal bars 28. In this condition, the pushers 7, which are shaped like rods, contact the lateral surfaces of the rolls and are oriented at right angles to the orientation of the tubes 25.

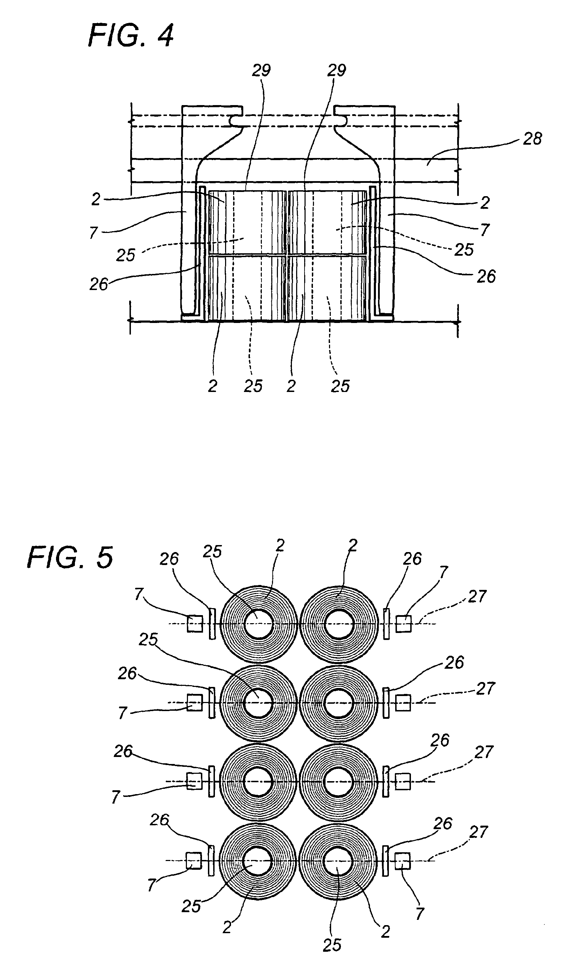

The apparatus 1 can, however, also be used to form groups of rolls 2 positioned on the supporting surface 3 with the tubes 25 oriented at right angles to the supporting surface 3. For this purpose, as illustrated in Figures 4 and 5, the pushers 7 may be equipped with flat elements 26 which tangentially contact the lateral surfaces of the rolls 2 in a substantially parallel direction, with their axes 27 substantially centred with respect to the tubes 25 of the rolls 2. The flat elements 26 operate in conjunction with the stops 28, which are parallel to the supporting surface 3 and contact the planar faces 29 of the rolls on the side opposite the supporting surface 3 itself.

The apparatus 1 made in accordance with the invention as described above, has important advantages over apparatuses 1 known to prior art in this field. Indeed, as clearly shown in Figure 3, the carriages 10, which extend from one side 21 to the other supporting the entire chain conveyor 4 assembly, have a very wide centre distance in the direction transversal to the direction of roll feed. This makes it possible to obtain constructions with great structural rigidity, creating conditions that minimise the intensity of the forces bearing down on the structure and opposing the smooth sliding of the carriages 10 in the guide rails 8. High structural strength and smooth operation of the carriages 10 are conditions favourable to improving the performance of the apparatus 1 in terms of both product quality and quantity.

Moreover, the surface to surface contact between the bars 13 of the carriages 10 and the heads 15 of the pushers 7, as well as between the protrusions 16 of the heads 15 and the tracks 6 of the chain conveyors 4 also minimises the play between the parts of the apparatus 1 and contributes to maintaining smooth operation in time. The absence of rolling contact bearings and the simple structure also appreciably reduce the construction and operating costs of the apparatus 1.

The use of stops 28 that do not need to be substituted when the apparatus 1 is changed from the configuration where the rolls are oriented with the internal tubes 25 parallel to the supporting surface 3 to that where the rolls are oriented with the internal tubes 25 at right angles to it provides the added advantage of simplifying and speeding up changeover operations to deal with products of a different size.

The invention described has evident industrial applications and can be subject to modifications and variations without thereby departing from the scope of the inventive concept. Moreover, all the details of the invention may be substituted by technically equivalent elements.

## Claims

1. An apparatus for forming ordered groups of products (2) - especially rolls of toilet or kitchen paper - comprising: a supporting surface (3) for the products (2); two or more power-driven chain conveyors (4) mounted above the supporting surface (3) and each equipped with a pair of pulleys (5), a track (6) or chain looped around the two pulleys (5) and a set of pushers (7) projecting from the track (6); the apparatus being **characterised in that** it further comprises a single pair of parallel guide rails (8) located on each side of the chain conveyors (4) and defining closed-loop paths lying in longitudinal planes (9) at right angles to the product (2) supporting surface (3); a succession of carriages (10) engaged with the guide rails (8) and bearing all the chain conveyors (4) side by side in such a manner that they can move towards and away from each other; and means (18, 19, 5f, 6, 15) for adjusting the position of the chain conveyors (4) on the carriages (10) according to the size of the required group of products (2).

2. The apparatus according to claim 1, **characterised in that** the carriages (10) include single guide means (13) for shifting the chain conveyors (4).

3. The apparatus according to claim 2, **characterised in that** the guide means include pairs of bars (13) parallel to the supporting surface (3) for the products (2) and oriented in a direction transversal to the plane (14) in which the chain conveyors (4) lie, the corresponding pushers (7) on the chain conveyors (4) being slidably coupled to these pairs of bars (13).

4. The apparatus according to claim 3, **characterised in that** the bars (13) are cylindrical in shape.

5. The apparatus according to claim 3 or 4, **characterised in that** the bars (13) are made of carbon.

6. The apparatus according to any of the foregoing claims, **characterised in that** the pushers (7) include heads (15) slidably engaged with the bars (13) and having protrusions (16) extending towards the track (6) or chain of the respective chain conveyor (4) and designed to connect with matching sides (17) of the track (6) or chain, said protrusions (16) allowing the pushers (7) to perform movements parallel to the bars (13) and correlated to corresponding sideways movements applied to the track (6) by the adjustment means.

7. The apparatus according to any of the foregoing claims, **characterised in that** the adjustment means include at least one adjustment screw (18) and at least one lead nut (19) associated with it and attached to one of the chain conveyors (4), the bidirectional rotation of the adjustment screw (18) relative to the lead nut (19) causing the chain conveyor (4) to move towards and away from a fixed reference (20).

8. The apparatus according to claim 7, **characterised in that** the reference (20) is constituted by one of the two or more chain conveyors (4) mounted in a fixed position.

9. The apparatus according to any of the foregoing claims, **characterised in that** it comprises a plurality of parallel chain conveyors (4) in a number greater than two.

10. The apparatus according to any of the foregoing claims, **characterised in that** it comprises two parallel sides (21) supporting the guide rails (8) on which the carriages (10) slide.

11. The apparatus according to any of the foregoing claims, where the products (2) are rolls of toilet or kitchen paper having an internal tube (25), the rolls resting on the supporting surface (3) with the tubes oriented in a direction parallel to the surface (3), the apparatus being **characterised in that** the pushers (7) are shaped like rods and come into contact with the rolls with the rods oriented at right angles to the roll tubes.

12. The apparatus according to any of the foregoing claims from 1 to 10, where the products (2) are rolls of toilet or kitchen paper having an internal tube (25), the rolls resting on the supporting surface (3) with the tubes oriented at right angles to the product (2) supporting surface (3), the apparatus being **characterised in that** the pushers (7) include flat elements (26) which tangentially contact the lateral surfaces of the rolls, with their axes (27) parallel and substantially aligned with the roll tubes (25).

13. The apparatus according to claim 12, **characterised in that** the flat elements (26) operate in conjunction with stops (28), which are parallel to the supporting surface (3), and contact the planar faces (29) of the rolls on the side opposite the supporting surface (3).

## Patentansprüche

1. Vorrichtung zum Bilden geordneter Gruppen von Produkten (2) - insbesondere Toiletten- oder Küchenpapierrollen - enthaltend: eine Trägerfläche (3) für die Produkte (2); zwei oder mehrere angetriebene Kettenförderer (4), montiert über der Trägerfläche (3) und jeder versehen mit einem Paar von Rollen (5); einer um die beiden Rollen gewundenen Raupe (6) oder einer Kette und einem Satz von Schiebern (7), die aus der Raupe (6) hervorstehen; wobei die Vorrichtung **dadurch gekennzeichnet ist, dass** sie ausserdem ein einzelnes Paar von parallelen Führungsschienen (8) enthält, angeordnet auf jeder Seite der Kettenförderer (4) und ringförmige geschlossene Bahnen bildend, die in Längsebenen (9) und im rechten Winkel zu der Trägerfläche (3) für die Produkte (2) verlaufen; eine Reihe von Schlitten (10), die mit den Führungsschienen (8) im Eingriff sind und alle Seite an Seite angeordneten Kettenförderer (4) auf solche Weise stützen, dass sie sich zueinander hin und voneinander fort bewegen können; sowie Mittel (18, 19, 5f, 6, 15) zum Regulieren der Position der Kettenförderer (4) auf den Schlitten (10) je nach der Grösse der angeforderten Gruppe von Produkten (2).

2. Vorrichtung nach Patentanspruch 1, **dadurch gekennzeichnet, dass** die Schlitten (10) einzelne Führungsmittel (13) zum Verschieben der Kettenförderer (4) enthalten.

3. Vorrichtung nach Patentanspruch 2, **dadurch gekennzeichnet, dass** die Führungsmittel Paare von Stangen (13) enthalten, parallel zu der Trägerfläche (3) für die Produkte (2) und orientiert in einer Richtung quer zu der Ebene (14), in welcher die Kettenförderer (4) liegen, wobei die entsprechenden Schieber (7) auf den Kettenförderern (4) gleitbar an diese Paare von Stangen (13) angeschlossen sind.

4. Vorrichtung nach Patentanspruch 3, **dadurch gekennzeichnet, dass** die Stangen (13) zylindrisch in der Form sind.

5. Vorrichtung nach Patentanspruch 3 oder 4, **dadurch gekennzeichnet, dass** die Stangen (13) aus Kohlenstoff hergestellt sind.

6. Vorrichtung nach einem beliebigen der vorstehenden Patentansprüche, **dadurch gekennzeichnet, dass** die Schieber (7) Köpfe (15) enthalten, die gleitbar mit den Stangen (13) verbunden sind und Vorsprünge (16) aufweisen, die sich in Richtung der Raupe (6) oder Kette des jeweiligen Kettenförderers (4) erstrecken und dazu bestimmt sind, sich mit passrechten Seiten (17) der Raupe (6) oder Kette zu verbinden, wobei die genannten Vorsprünge (16) den Schiebern (7) erlauben, Bewegungen parallel zu den Stangen (13) und zusammenhängend mit entsprechenden seitlichen Bewegungen auszuführen, die durch die Reguliermittel auf die Raupe (6) übertragen werden.

7. Vorrichtung nach einem beliebigen der vorstehenden Patentansprüche, **dadurch gekennzeichnet, dass** die Reguliermittel wenigstens eine Stellschraube (18) enthalten, sowie wenigstens eine Führungsmutter (19), mit dieser verbundenen und befestigt an einem der Kettenförderer (4), wobei die Umdrehung in beiden Richtungen der Stellschraube (18) im Verhältnis zu der Führungsmutter (19) bewirkt, dass sich der Kettenförderer (4) zu einem festgelegten Bezug (20) hin und von diesem fort bewegt.

8. Vorrichtung nach Patentanspruch 7, **dadurch gekennzeichnet, dass** der Bezug (20) aus einem der beiden oder mehreren Kettenförderer (4) gebildet ist, montiert in einer feststehenden Position.

9. Vorrichtung nach einem beliebigen der vorstehenden Patentansprüche, **dadurch gekennzeichnet, dass** sie eine Anzahl von parallelen Kettenförderern (4) in einer grösseren Zahl als zwei enthält.

10. Vorrichtung nach einem beliebigen der vorstehenden Patentansprüche, **dadurch gekennzeichnet, dass** sie zwei parallele Seitenteile (21) enthält, welche die Führungsschienen (8) tragen, auf denen die Schlitten (10) gleiten.

11. Vorrichtung nach einem beliebigen der vorstehenden Patentansprüche, bei welcher die Produkte (2) Toiletten- oder Küchenpapierrollen sind, die eine interne Hülse (25) haben, wobei die Rollen mit den Hülsen in einer Richtung parallel zu der Trägerfläche (3) ausgerichtet auf der Trägerfläche (3) liegen, wobei die Vorrichtung **dadurch gekennzeichnet ist, dass** die Schieber (7) als Stangen ausgebildet sind und mit im rechten Winkel zu den Rollenhülsen ausgerichteten Stangen mit den Rollen in Kontakt kommen.

12. Vorrichtung nach einem beliebigen der vorstehenden Patentansprüche von 1 bis 10, bei welcher die Produkte (2) Toiletten- oder Küchenpapierrollen sind, die eine interne Hülse (25) haben, wobei die Rollen mit den Hülsen in im rechten Winkel zu der die Produkte (2) tragenden Trägerfläche (3) ausgerichtet auf der Trägerfläche (3) liegen, wobei die Vorrichtung **dadurch gekennzeichnet ist, dass** die Schieber (7) flache Elemente (26) enthalten, welche tangential mit den seitlichen Oberflächen der Rollen in Kontakt kommen, und zwar mit ihren Achsen (27) parallel mit den Rollenhülsen (25) und im wesentlichen zu die-sen ausgerichtet.

13. Vorrichtung nach Patentanspruch 12, **dadurch gekennzeichnet, dass** die flachen Elemente (26) mit Anschlägen (28) zusammenarbeiten, welche parallel zu der Trägerfläche (3) angeordnet sind und mit den ebenen Flächen (29) der Rollen Kontakt haben, und zwar auf der von der Trägerfläche (3) entgegengesetzten Seite.

## Revendications

1. Une installation pour former des groupes rangés d'articles (2) - notamment des rouleaux de papier hygiénique ou essuie-tout - comprenant : un plan (3) de support des articles (2) ; deux ou plus convoyeurs à chaîne motorisés (4) montés au-dessus du plan de support (3) et équipés chacun d'une paire de poulies (5), d'une chenille (6) ou chaîne enroulée en boucle autour des deux poulies (5) et d'une série de pousseurs (7) qui se projettent à partir de la chenille (6) ; l'installation étant **caractérisée en ce qu'**elle comprend en outre une unique paire de rails de guidage (8) parallèles, situés de chaque côté des convoyeurs à chaîne (4) et définissant des parcours annulaires fermés situés dans des plans longitudinaux (9) perpendiculaires au plan (3) de support des articles (2) ; une succession de chariots (10) en prise avec les rails de guidage (8) et soutenant tous les convoyeurs à chaîne (4) de manière à ce que ces derniers soient côte à côte et puissent s'approcher et s'éloigner l'un de l'autre ; et des moyens (18, 19, 5f, 6, 15) pour le réglage de la position des convoyeurs à chaîne (4) sur les chariots (10) en fonction du format du groupe requis d'articles (2).

2. L'installation selon la revendication 1, **caractérisée en ce que** les chariots (10) comprennent des moyens de guidage (13) uniques pour le déplacement des convoyeurs à chaîne (4).

3. L'installation selon la revendication 2, **caractérisée en ce que** les moyens de guidage comprennent des paires de barres (13) parallèles au plan (3) de support des articles (2) et orientées dans une direction transversale au plan d'appartenance (14) des convoyeurs à chaîne (4), les pousseurs (7) correspondants des convoyeurs à chaîne (4) étant accouplés de façon coulissante avec ces paires de barres (13).

4. L'installation selon la revendication 3, **caractérisée en ce que** les barres (13) ont une forme cylindrique.

5. L'installation selon la revendication 3 ou 4, **caractérisée en ce que** les barres (13) sont fabriquées en carbone.

6. L'installation selon l'une quelconque des revendications précédentes, **caractérisée en ce que** les pousseurs (7) comprennent des têtes (15) en prise coulissante avec les barres (13) et présentant des saillies (16) s'étendant vers la chenille (6) ou chaîne du convoyeur à chaîne (4) respectif et destinées à s'associer avec des côtés complémentaires (17) de la chenille (6) ou chaîne, lesdites saillies (16) permettant aux pousseurs (7) d'effectuer des mouvements parallèles aux barres (13) et corrélés à des mouvements latéraux correspondants imprimés à la chenille (6) par les moyens de réglage.

7. L'installation selon l'une quelconque des revendications précédentes, **caractérisée en ce que** les moyens de réglage comprennent au moins une vis de réglage (18) et au moins un écrou de vis-mère (19) associé à ladite vis de réglage (18) et fixé à un des convoyeurs à chaîne (4), la rotation bidirectionnelle de la vis de réglage (18) par rapport à l'écrou de vis-mère (19) entraînant le convoyeur à chaîne (4) à s'approcher ou à s'éloigner d'une référence fixe (20).

8. L'installation selon la revendication 7, **caractérisée en ce que** la référence (20) est déterminée par un desdits deux ou plus convoyeurs à chaîne (4) monté dans une position fixe.

9. L'installation selon l'une quelconque des revendications précédentes, **caractérisée en ce qu'**elle comprend une pluralité de convoyeurs à chaîne (4) parallèles dont le nombre est supérieur à deux.

10. L'installation selon l'une quelconque des revendications précédentes, **caractérisée en ce qu'**elle comprend deux côtés parallèles (21) supportant les rails de guidage (8) sur lesquels coulissent les chariots (10).

11. L'installation selon l'une quelconque des revendications précédentes, où les articles (2) sont des rouleaux de papier hygiénique ou essuie-tout ayant un tube intérieur (25), les rouleaux reposant sur le plan de support (3) avec les tubes en question orientés dans une direction parallèle au plan (3), l'installation étant **caractérisée en ce que** les pousseurs (7) sont sous forme de tiges et viennent en contact avec les rouleaux avec lesdites tiges orientées à angle droit avec les tubes des rouleaux.

12. L'installation selon l'une quelconque des revendications précédentes de 1 à 10, où les articles (2) sont des rouleaux de papier hygiénique ou essuie-tout ayant un tube intérieur (25), les rouleaux reposant sur le plan de support (3) avec les tubes en question orientés perpendiculairement au plan (3) de support des articles (2), l'installation étant **caractérisée en ce que** les pousseurs (7) comprennent des éléments plats (26) qui viennent en contact de tangence avec les surfaces latérales des rouleaux, avec leur axe (27) respectif parallèle et essentiellement aligné par rapport aux tubes (25) des rouleaux.

13. L'installation selon la revendication 12, **caractérisée en ce que** les éléments plats (26) coopèrent avec des éléments d'arrêt (28) qui sont parallèles au plan de support (3) et viennent en contact avec les faces planes (29) des rouleaux du côté opposé au plan de support (3).
